(19) Europäisches Patentamt
European Patent Office
Office européen des brevets

(11) **EP 4 042 600 B1**

(12) **EUROPEAN PATENT SPECIFICATION**

(45) Date of publication and mention
of the grant of the patent:
**17.06.2026   Bulletin 2026/25**

(21) Application number: **20723074.9**

(22) Date of filing: **28.04.2020**

(51) International Patent Classification (IPC):
*H04B 10/532* (2013.01)     *H04B 10/556* (2013.01)
*H04J 14/06* (2006.01)

(52) Cooperative Patent Classification (CPC):
**H04B 10/532; H04B 10/5561**

(86) International application number:
**PCT/EP2020/061754**

(87) International publication number:
**WO 2021/219203 (04.11.2021 Gazette 2021/44)**

(54) **OPTICAL TRANSMITTERS AND TRANSMISSION METHODS**

OPTISCHER SENDER UND ÜBERTRAGUNGSVERFAHREN

ÉMETTEURS OPTIQUES ET PROCÉDÉS DE TRANSMISSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.08.2022   Bulletin 2022/33**

(73) Proprietor: **Huawei Technologies Co., Ltd.
Longgang District,
Shenzhen, Guangdong
518129 (CN)**

(72) Inventors:
• **ZHANG, Huijian**
  **80992 Munich (DE)**
• **BENDIMERAD, Djalal, Falih**
  **80992 Munich (DE)**

(74) Representative: **Roth, Sebastian
Mitscherlich PartmbB
Karlstraße 7
80333 München (DE)**

(56) References cited:
**WO-A1-2019/048028     US-A1- 2019 288 793
US-B2- 9 768 875**

• **BENDIMERAD D F ET AL: "Nonlinearity-tolerant
8D modulation formats by set-partitioning PDM-
QPSK", ARXIV.ORG, CORNELL UNIVERSITY
LIBRARY, 201 OLIN LIBRARY CORNELL
UNIVERSITY ITHACA, NY 14853, 14 December
2017 (2017-12-14), XP080843667**

EP 4 042 600 B1

**Description**

TECHNICAL FIELD

The present disclosure relates generally to an optical transmitter and to a method for optically transmitting a data signal. The disclosure specifically relates to the encoding and modulating of the data signal to be transmitted, and thereby especially to the use of multi-dimensional modulation formats.

BACKGROUND

In modem optical coherent transmission, information (a data signal) is encoded in the amplitude and phase of a carrier wave emitted by a laser. To this end, information bits of the data signal are mapped to symbols, which can be represented by complex numbers. A given complex symbol is then used in turn to modulate the in-phase (I) and quadrature (Q) components of an optical carrier during a fixed time duration (referred to as 'symbol time', 'interval' or transmission 'time slot'). In conventional polarization-multiplexed transmission, two carrier waves are modulated and transmitted over two orthogonal polarizations (referred to as X and Y) of the optical carrier. The optical carrier is, for instance, an optical fiber.

It has been realized that performance gains and low spectral efficiencies can be achieved by designing so-called multi-dimensional modulation formats.

In particular, one can imagine each combination of the above-mentioned degrees of freedom as one dimension of a high-dimensional space. For example, the I-component of the X polarization may correspond to one dimension, which can be labelled IX. Then, a four-dimensional space spanned by vectors (IX, QX, IY, QY) can be obtained. The dimension of this space can be increased e.g. to eight by grouping pairs of time slots and adding the time slot (indexed 1 or 2 for two consecutive time slots) as an additional degree of freedom. This scheme can obviously be generalized to even higher dimensions by increasing further the number of time slots to more than 2.

Selecting constellation points (so-called set partitioning) in the high-dimensional space corresponds to introducing constraints between the different degrees of freedom. Such constraints can be used to optimize linear performance of an optical transmitter using the modulation format. For example, linear performance can be improved by choosing points from a lattice that corresponds to a dense packing in high dimensions. Nonlinear performance can, for example, be optimized by choosing constellation points with predefined values of the polarization state.

However, the design of (multi-dimensional) modulation formats for optical coherent transmission is a great technical challenge. This is due to the many boundary conditions the modulation formats have to comply with. That is, for instance, the modulation formats should meet the requirement of a maximum Required Optical Signal to Noise Ratio (ROSNR). Therefore, good performance in the linear and nonlinear channel is required. The ROSNR value is fixed by the type of coherent optical transmission system. For long haul and ultra-long haul transmission systems, the major limitation is the fiber Kerr effect, which impairs a wavelength and polarization multiplexed optical signal by introducing Self Phase Modulation (SPM), Cross Phase Modulation (XPM) and Cross Polarization Modulation (XPolM). Accordingly, one technical challenge here is reducing (mitigating) these effects on the optical signal.

Furthermore, in the context of the present disclosure, the modulation formats should be able to operate at low spectral efficiencies below 2 bits/interval, wherein the projection onto an interval comprises the four dimensions: in-phase (I) and quadrature (Q) each in two orthogonal polarizations (X, Y). The modulation formats should also be constructed with a simple mapping, so that they can be implemented with low complexity in an optical transmitter or transmission system. Finally, the modulation formats should have optimal labeling of the constellation points to result in a good linear performance of the optical transmission system.

Conventional modulation formats with the lowest spectral efficiencies are, for example, Polarization Division Multiplexed Binary Phase Shift Keying and Quadrature Phase Shift Keying (PDM-BPSK), 8-dimensional 2 Quadrature Amplitude Modulation (8D2QAM) or so-called X-constellation, and Polarization-Balanced 4 Bits in 8 Dimensions (PB-4B8D). While the first format (i.e., PDM-BPSK) is well-known, the two latter (i.e., the 8D2QAM and the PB-4B8D) came as an answer to a performance crunch that the first one could not overcome. For instance, the two latter formats have a polarization balanced property that allows to mitigate the optical fiber nonlinear impairments during the propagation. Specifically, for polarization balanced modulation formats, the sum of Stokes-vectors over all symbols in time vanishes, resulting on a reduced XPolM effects. However, in some context such as repeater-less transmission systems, where the signal is not regenerated during the transmission, even mitigating optical fiber nonlinear impairments is not sufficient to reach longer distance.

WO 2019/048028 A1 discloses an optical transmitter. The optical transmitter (100) comprises a modulator configured to use in each transmission time slot a first symbol to modulate a first carrier wave and a second symbol to modulate a second carrier wave, and to transmit the two carrier waves over orthogonal polarizations of an optical carrier. Symbols in consecutive transmission time slots have non-identical polarization states. Document "BENDIMERAD D. F. et al., "Nonlinearity-tolerant 8D modulation formats by set-partitioning PDM-QPSK" discloses a further example of optical transmission using a multi-dimensional modulation format.

SUMMARY

In view of the above-mentioned challenges and limitations, embodiments of the present invention aim to improve the conventional solutions for modulation formats to be used in optical transmission systems. An objective is to provide an optical transmitter and a transmitting method, which operate with better performance compared to the corresponding solutions known in the art. Thereby, high-dimensional modulation formats with a spectral efficiency ranging below 2bits/interval, and better linear and nonlinear performances, are desired. Further, simple mapping rules from data signal bits to symbols should be given. The objective is achieved by the embodiments of the disclosure as described in the enclosed independent claims. Advantageous implementations of the embodiments of the disclosure are further defined in the dependent claims.

A first aspect of the present disclosure provides an optical transmitter for transmitting a data signal, comprising an encoder configured to encode the data signal by selecting based on a bit sequence a first symbol and a second symbol from a set of four quadrature phase shift keying symbols for each one of at least two transmission time slots, and a modulator configured to use in each transmission time slot the first symbol to modulate a first carrier wave and the second symbol to modulate a second carrier wave, and to transmit the two carrier waves over orthogonal polarizations of an optical carrier, wherein the data signal has one information bit b1, and the encoder is configured to generate the bit sequence having eight bits b1, b1'... b7', wherein seven overhead bits b1'... b7' are generated according to:

$$b1' = \overline{b1}$$

$$b2' = b1$$

$$b3' = \overline{b1}$$

$$b4' = \overline{b1}$$

$$b5' = b1$$

$$b6' = b1$$

$$b7' = \overline{b1}$$

The optical transmitter of the first aspect can achieve a better performance than an optical transmitter according to the conventional solutions.

The optical transmitter of the first aspect reduces the spectral efficiency of the modulation format, which may increase its linear channel performance, and as a consequence, increase the transmission distance.

The optical transmitter obtains multi-dimensional modulation formats with spectral efficiencies below 2 bits/interval. For example, three eight-dimensional modulation formats may be obtained at spectral efficiencies of 0.5, 1 and 1.5 bits/interval, which may have better performances compared to modulation formats at higher spectral efficiencies.

In some embodiments, it may be possible to construct modulation formats in the target spectral efficiency range from the most general base constellation with constant modulus: For example, the modulation formats may be constructed by repeating PDM-QPSK in a number of subsequent time slots. Moreover, a number of symbols may be selected, the number of which corresponds to the desired spectral efficiency. The selection is subject to certain constraints.

Furthermore, the properties of the symbols of the base constellation may be as follows:

- All symbols have a constant modulus.
- 64 symbols have identical states of polarization in two consecutive time-slots.
- 64 symbols have opposite states of polarization in two consecutive time-slots.
- 128 symbols have different states of polarization in two consecutive time-slots.

The three modulation formats presented here have a linear and nonlinear channel performance such that the reached transmission distance exceeds the one of all modulation formats of the state of the art.

In an implementation form of the first aspect, for two consecutive transmission time slots T1 and T2, for two orthogonal polarizations X and Y of the optical carrier, and for a set of four QPSK symbols denoted -1-1i, -1+1i, 1-1i and 1+1i, the encoder is configured to select:

| Labelling bit b1 | Time slot $T_1$ | | Time slot $T_2$ | |
|---|---|---|---|---|
| | X polarization | Y polarization | X polarization | Y polarization |
| 0 | -1+1i | -1+1i | +1-1i | -1+1i |
| 1 | +1-1i | +1-1i | -1+1i | +1-1i |

In a further implementation form of the first aspect, the optical transmitter is configured to transmit the data signal with a spectral efficiency of 0.5 bits per transmission time slot.

In a further implementation form of the first aspect, the symbol polarization states in each transmission time slot take one of at least four distinct polarizations states.

In a further implementation form of the first aspect, the modulator is configured to modulate an In-Phase and a Quadrature component of each carrier wave.

In a further implementation form of the first aspect, symbols in at least a subset of consecutive transmission time slots have anti-parallel polarization states.

A second aspect of the disclosure provides an optical transmitter for transmitting a data signal, comprising an encoder configured to encode the data signal by selecting based on a bit sequence a first symbol and a second symbol from a set of four QPSK symbols for each one of at least two transmission time slots, and a modulator configured to use in each transmission time slot the first symbol to modulate a first carrier wave and the second symbol to modulate a second carrier wave, and to transmit the two carrier waves over orthogonal polarizations of an optical carrier, wherein the data signal has two information bits b1 and b2, and the encoder is configured to generate the bit sequence having eight bits b1, b2, b1'... b6', wherein six overhead bits b1'... b6' are generated according to:

$$b'_1 = b_1$$

$$b'_2 = b_2$$

$$b'_3 = b_2$$

$$b'_4 = b_1$$

$$b'_5 = \overline{b_2}$$

$$b'_6 = \overline{b_1}$$

The optical transmission system of the second aspect can achieve all advantages and effects of the optical transmitter of the first aspect.

In an implementation form of the second aspect, for two consecutive transmission time slots T1 and T2, for two orthogonal polarizations X and Y of the optical carrier, and for a set of four QPSK symbols denoted -1-1i, -1+1i, 1-1i and 1+1i, the encoder is configured to select:

| Labelling (from left to right) bits b1 b2 | Time slot $T_1$ | | Time slot $T_2$ | |
|---|---|---|---|---|
| | X polarization | Y polarization | X polarization | Y polarization |
| 0 0 | -1-1i | -1-1i | -1-1i | +1+1i |
| 0 1 | -1+1i | -1+1i | +1-1i | -1+1i |
| 1 0 | +1-1i | +1-1i | -1+1i | +1-1i |
| 1 1 | +1+1i | +1+1i | +1+1i | -1-1i |

In a further implementation form of the second aspect, the optical transmitter is further configured to transmit the data signal with a spectral efficiency of 1 bit per transmission time slot.

In a further implementation form of the second aspect, the symbol polarization states in each transmission time slot take one of at least four distinct polarizations states.

In a further implementation form of the second aspect, the modulator is configured to modulate an In-Phase and a Quadrature component of each carrier wave.

In a further implementation form of the second aspect, symbols in at least a subset of consecutive transmission time slots have anti-parallel polarization states.

A third aspect of the disclosure provides an optical transmitter for transmitting a data signal, comprising an encoder configured to encode the data signal by selecting based on a bit sequence a first symbol and a second symbol from a set of four QPSK symbols for each one of at least two transmission time slots, and a modulator configured to use in each transmission time slot the first symbol to modulate a first carrier wave and the second symbol to modulate a second carrier wave, and to transmit the two carrier waves over orthogonal polarizations of an optical carrier, wherein the data signal has three information bits b1...b3, and the encoder is configured to generate the bit sequence having eight bits b1...b3, b1'... b5', wherein five overhead bits b1'... b5' are generated according to:

$$b_1' = b_1$$

$$b_2' = b_2$$

$$b_3' = b_1 \oplus b_2 \oplus b_3$$
$$b_4' = \overline{b_3}$$

$$b_5' = \overline{b_1 \oplus b_2 \oplus b_3}$$

The optical transmission system of the second aspect can achieve all advantages and effects of the optical transmitter of the first aspect or the second aspect.

In an implementation form of the third aspect, for two consecutive transmission time slots T1 and T2, for two orthogonal polarizations X and Y of the optical carrier, and for a set of four QPSK symbols denoted -1-1i, -1+1i, 1-1i and 1+1i, the encoder is configured to select:

| Labelling (from left to right) bits b1 b2 b3 | Time slot $T_1$ | | Time slot $T_2$ | |
|---|---|---|---|---|
| | X polarization | Y polarization | X polarization | Y polarization |
| 0 0 0 | -1-1i | -1-1i | -1-1i | +1+1i |
| 0 0 1 | -1-1i | -1-1i | +1+1i | -1-1i |
| 0 1 0 | -1+1i | -1+1i | -1+1i | +1-1i |
| 0 1 1 | -1+1i | -1+1i | +1-1i | -1+1i |
| 1 0 0 | +1-1i | +1-1i | -1+1i | +1-1i |
| 1 0 1 | +1-1i | +1-1i | +1-1i | -1+1i |
| 1 1 0 | +1+1i | +1+1i | -1-1i | +1+1i |
| 1 1 1 | +1+1i | +1+1i | +1+1i | -1-1i |

In a further implementation form of the third aspect, the optical transmitter is configured to transmit the data signal with a spectral efficiency of 1.5 bits per transmission time slot.

In a further implementation form of the third aspect, the symbol polarization states in each transmission time slot take one of at least four distinct polarizations states.

In a further implementation form of the third aspect, the modulator is configured to modulate an In-Phase and a Quadrature component of each carrier wave.

In a further implementation form of the third aspect, symbols in at least a subset of consecutive transmission time slots have anti-parallel polarization states.

A fourth aspect of the disclosure provides an optical transmission system, comprising the optical transmitter according to one of the first to third aspects , and an optical receiver for receiving the data signal, wherein the optical receiver is configured to receive and decode the modulated carrier waves of the optical carrier to obtain the data signal.

A fifth aspect of the disclosure provides a method of optically transmitting a data signal, comprising encoding the data signal by selecting based on a bit sequence a first symbol and a second symbol from a set of four QPSK symbols for each one of at least two transmission time slots, and using in each transmission time slot the first symbol to modulate a first carrier wave and the second symbol to modulate a second carrier wave, and transmitting the two carrier waves over orthogonal polarizations of an optical carrier, wherein the data signal has one information bit b1, and the method comprises generating the bit sequence having eight bits b1, b1'... b7', wherein seven overhead bits b1'... b7' are generated according to:

$$b1' = \overline{b1}$$

$$b2' = b1$$

$$b3' = \overline{b1}$$

$$b4' = \overline{b1}$$

$$b5' = b1$$

$$b6' = b1$$

$$b7' = \overline{b1}$$

In an implementation form of the fifth aspect, for two consecutive transmission time slots T1 and T2, for two orthogonal polarizations X and Y of the optical carrier, and for a set of four QPSK symbols denoted -1-1i, -1+11, 1-1i and 1+1i, the method further comprises selecting:

| Labelling bit b1 | Time slot $T_1$ | | Time slot $T_2$ | |
|---|---|---|---|---|
| | X polarization | Y polarization | X polarization | Y polarization |
| 0 | -1+1i | -1+1i | +1-1i | -1+1i |
| 1 | +1-1i | +1-1i | -1+1i | +1-1i |

In a further implementation form of the fifth aspect, the method further comprises transmitting the data signal with a spectral efficiency of 0.5 bits per transmission time slot.

In a further implementation form of the fifth aspect, the symbol polarization states in each transmission time slot take one of at least four distinct polarizations states.

In a further implementation form of the fifth aspect, the method further comprises modulating an In-Phase and a Quadrature component of each carrier wave.

In a further implementation form of the fifth aspect, symbols in at least a subset of consecutive transmission time slots have anti-parallel polarization states.

A sixth aspect of the disclosure provides a method of optically transmitting a data signal, comprising encoding the data signal by selecting based on a bit sequence a first symbol and a second symbol from a set of four QPSK symbols for each one of at least two transmission time slots, and using in each transmission time slot the first symbol to modulate a first carrier wave and the second symbol to modulate a second carrier wave, and transmitting the two carrier waves over orthogonal polarizations of an optical carrier, wherein the data signal has two information bits b1...b2, and the method comprises generating the bit sequence having eight bits b1, b2, b1'... b6', wherein six overhead bits b1'... b5' are generated according to:

$$b'_1 = b_1$$

$$b'_2 = b_2$$

$$b'_3 = b_2$$

$$b'_4 = b_1$$

$$b'_5 = \overline{b_2}$$

$$b'_6 = \overline{b_1}$$

In an implementation form of the sixth aspect, for two consecutive transmission time slots T1 and T2, for two orthogonal polarizations X and Y of the optical carrier, and for a set of four QPSK symbols denoted -1-1i, -1+11, 1-1i and 1+1i, the method further comprises selecting:

| Labelling (from left to right) bits b1 b2 | Time slot $T_1$ | | Time slot $T_2$ | |
|---|---|---|---|---|
| | X polarization | Y polarization | X polarization | Y polarization |
| 0 0 | -1-1i | -1-1i | -1-1i | +1+1i |
| 0 1 | -1+1i | -1+1i | +1-1i | -1+1i |
| 1 0 | +1-1i | +1-1i | -1+1i | +1-1i |
| 1 1 | +1+1i | +1+1i | +1+1i | -1-1i |

In a further implementation form of the sixth aspect, the method further comprises transmitting the data signal with a spectral efficiency of 1 bit per transmission time slot.

In a further implementation form of the sixth aspect, the symbol polarization states in each transmission time slot take one of at least four distinct polarizations states.

In a further implementation form of the sixth aspect, the method further comprises modulating an In-Phase and a Quadrature component of each carrier wave.

In a further implementation form of the sixth aspect, symbols in at least a subset of consecutive transmission time slots have anti-parallel polarization states.

A seventh aspect of the disclosure provides a method of optically transmitting a data signal, comprising encoding the data signal by selecting based on a bit sequence a first symbol and a second symbol from a set of four QPSK symbols for each one of at least two transmission time slots, and using in each transmission time slot the first symbol to modulate a first carrier wave and the second symbol to modulate a second carrier wave, and transmitting the two carrier waves over orthogonal polarizations of an optical carrier, wherein the data signal has three information bits b1...b3, and the method comprises generating the bit sequence having eight bits b1...b3, b1'... b5', wherein five overhead bits b1'... b5' are generated according to:

$$b'_1 = b_1$$

$$b'_2 = b_2$$

$$b'_3 = b_1 \oplus b_2 \oplus b_3$$

$$b'_4 = \overline{b_3}$$

$$b'_5 = \overline{b_1 \oplus b_2 \oplus b_3}$$

In an implementation form of the seventh aspect, for two consecutive transmission time slots T1 and T2, for two orthogonal polarizations X and Y of the optical carrier, and for a set of four QPSK symbols denoted -1-1i, -1+11, 1-1i and 1+1i, the method further comprises selecting:

| Labelling (from left to right) bits b1 b2 b3 | Time slot $T_1$ | | Time slot $T_2$ | |
| :---: | :---: | :---: | :---: | :---: |
| | X polarization | Y polarization | X polarization | Y polarization |
| 0 0 0 | -1-1i | -1-1i | -1-1i | +1+1i |
| 0 0 1 | -1-1i | -1-1i | +1+1i | -1-1i |
| 0 1 0 | -1+1i | -1+1i | -1+1i | +1-1i |
| 0 1 1 | -1+1i | -1+1i | +1-1i | -1+1i |
| 1 0 0 | +1-1i | +1-1i | -1+1i | +1-1i |
| 1 0 1 | +1-1i | +1-1i | +1-1i | -1+1i |
| 1 1 0 | +1+1i | +1+1i | -1-1i | +1+1i |
| 1 1 1 | +1+1i | +1+1i | +1+1i | -1-1i |

In a further implementation form of the seventh aspect, the method further comprises transmitting the data signal with a spectral efficiency of 1.5 bits per transmission time slot.

In a further implementation form of the seventh aspect, the symbol polarization states in each transmission time slot take one of at least four distinct polarizations states.

In a further implementation form of the seventh aspect, the method further comprises modulating an In-Phase and a Quadrature component of each carrier wave.

In a further implementation form of the seventh aspect, symbols in at least a subset of consecutive transmission time slots have anti-parallel polarization states.

An eighth aspect of the present disclosure provides a computer program comprising a program code for performing the method according to the one of the fifth to seventh aspects or any of their implementation forms.

A ninth aspect of the present disclosure provides a non-transitory storage medium storing executable program code which, when executed by a processor, causes the method according to the one of the fifth to seventh aspects or any of their implementation forms to be performed.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

BRIEF DESCRIPTION OF DRAWINGS

The above described aspects and implementation forms will be explained in the following description of specific embodiments in relation to the enclosed drawings, in which

FIG. 1    shows an optical transmitter for transmitting a data signal, according to an embodiment of the disclosure;

FIG. 2    shows another optical transmitter for transmitting a data signal, according to an embodiment of the disclosure;

FIG. 3    shows yet other optical transmitter for transmitting a data signal, according to an embodiment of the disclosure;

FIG. 4    shows a set of four symbols, in particular a QPSK constellation and labelling;

FIG. 5    shows an optical transmission system comprising an optical transmitter and an optical receiver, according to an embodiment of the disclosure;

FIG. 6    shows a flowchart of a method for transmitting a data signal, according to an embodiment of the disclosure;

FIG. 7    shows a flowchart of another method for transmitting a data signal, according to an embodiment of the disclosure; and

FIG. 8    shows a flowchart of yet other method for transmitting a data signal, according to an embodiment of the disclosure.

DETAILED DESCRIPTION OF EMBODIMENTS

The invention presents optical transmitters 100, 200, 300, an optical transmission system 500, and methods 600, 700, 800 that employ multi-dimensional modulation formats with spectral efficiencies of 0.5 bits/interval, 1 bit/interval and 1.5 bits/interval.

The modulation formats may be based on set-partitioning of the PDM-QPSK constellation with the following constraints:

- The symbols have opposite states of polarization in two consecutive time-slots.
- The overall set of symbols are chosen to have a high symmetry. More specifically, for each symbol of a given modulation format, the Euclidean distances to its neighbors is chosen to be the highest possible one, with respect to what the whole PDM-QPSK constellation offers.

When obtaining the modulation formats, resulting differences with known modulation formats in this spectral efficiency range may be that:

- The modulation formats are derived from the same base constellation.
- The modulation formats have the same modulus in each of the dimensions separately (this is a consequence of the previous property).
- The modulation formats contain symbols with the polarization balanced property.

Moreover, the optical transmitters 100, 200, 300, the optical transmission system 500, and the methods 600, 700, 800 may provide a unified construction for modulation formats with spectral efficiency less than 2 bits/interval.

Furthermore, three modulation formats will be provided in 8 dimensions including I and Q, two orthogonal polarizations and two consecutive time-slots. The three modulation formats are detailed in the following embodiments.

The steps for designing the modulation format may be as follow:

- Listing all 4^N-dimensional symbols obtained by repeating PDM-QPSK in N time slots
- Selecting symbols with the polarization-balance property
- Assigning a labeling such that the linear performance is optimal
- Deriving a formula that expresses redundant bits in terms of the non-redundant ones

During the symbol selection, the symbols are selected to obtain high Euclidian distances between them and a highly symmetric lattice (the neighborhood of each point looks the same).

In this way, it may be possible to construct three new modulation formats, at spectral efficiency SE=0.5, 1, 1.5bits/4D, which are further described in the following.

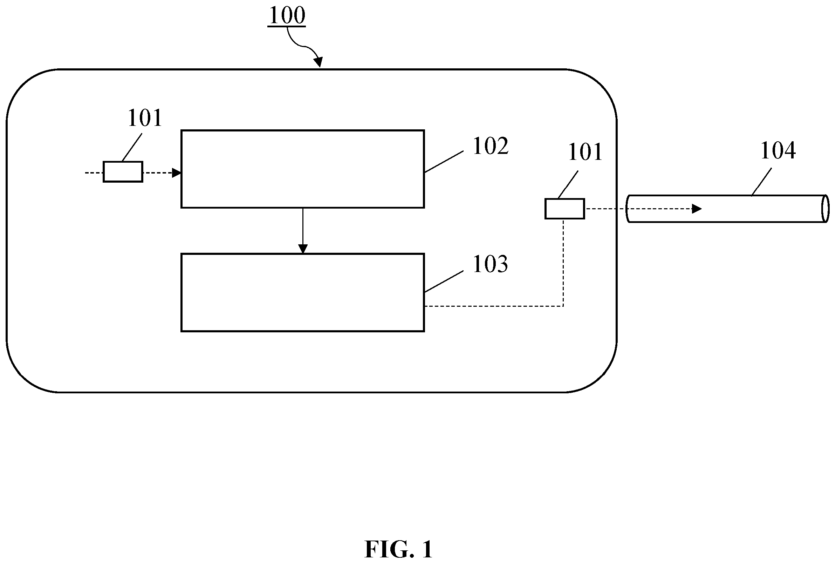

FIG. 1 shows an optical transmitter 100 for transmitting a data signal 101, according to an embodiment of the disclosure.

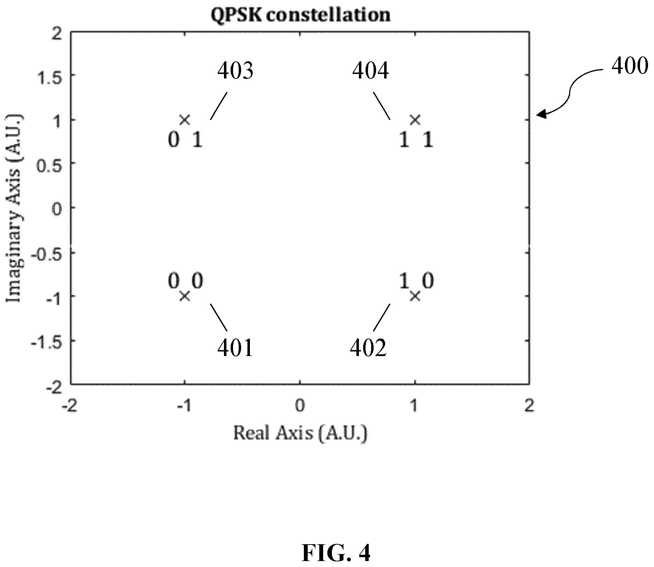

The optical transmitter 100 comprises an encoder 102 configured to encode the data signal 101 by selecting based on a bit sequence a first symbol and a second symbol from a set of four QPSK symbols 401, 402, 403, 404 (see FIG. 4) for each one of at least two transmission time slots.

The optical transmitter 100 further comprises a modulator 103 configured to use in each transmission time slot the first symbol to modulate a first carrier wave and the second symbol to modulate a second carrier wave, and to transmit the two carrier waves over orthogonal polarizations of an optical carrier 104, wherein the data signal 101 has one information bit b1, and the encoder 102 is configured to generate the bit sequence having eight bits b1, b1'... b7', wherein seven overhead bits b1'... b7' are generated according to:

$$b1' = \overline{b1}$$

$$b2' = b1$$

$$b3' = \overline{b1}$$

$$b4' = \overline{b1}$$

$$b5' = b1$$

$$b6' = b1$$

$$b7' = \overline{b1}$$

The optical transmitter 100 may comprise a processing circuitry (not shown in FIG. 1) configured to perform, conduct or initiate the various operations of the device 100 described herein. The processing circuitry may comprise hardware and software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multi-purpose processors. In one embodiment, the processing circuitry comprises one or more processors and a non-transitory memory connected to the one or more processors. The non-transitory memory may carry executable program code which, when executed by the one or more processors, causes the device 100 to perform, conduct or initiate the operations or methods described herein.

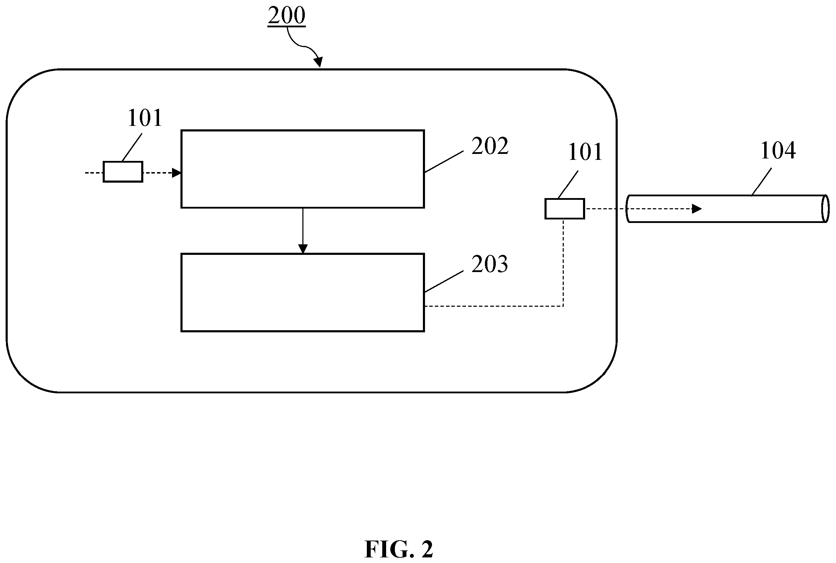

FIG. 2 shows an optical transmitter 200 for transmitting a data signal 101, according to an embodiment of the disclosure.

The optical transmitter 200 comprises an encoder 202 configured to encode the data signal 101 by selecting based on a bit sequence a first symbol and a second symbol from a set of four QPSK symbols 401, 402, 403, 404 (see FIG. 4) for each one of at least two transmission time slots.

The optical transmitter 200 further comprises a modulator 203 configured to use in each transmission time slot the first symbol to modulate a first carrier wave and the second symbol to modulate a second carrier wave, and to transmit the two carrier waves over orthogonal polarizations of an optical carrier 104, wherein the data signal 101 has two information bits b1 and b2, and the encoder 202 is configured to generate the bit sequence having eight bits b1, b2, b1'... b6', wherein six overhead bits b1'... b6' are generated according to:

$$b_1' = b_1$$

$$b_2' = b_2$$

$$b_3' = b_2$$

$$b_4' = b_1$$

$$b_5' = \overline{b_2}$$

$$b_6' = \overline{b_1}$$

The optical transmitter 200 may comprise a processing circuitry (not shown in FIG. 2) configured to perform, conduct or initiate the various operations of the device 100 described herein. The processing circuitry may comprise hardware and software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multi-purpose processors. In one embodiment, the processing circuitry comprises one or more processors and a non-transitory memory connected to the one or more processors. The non-transitory memory may carry executable program code which, when executed by the one or more processors, causes the device 100 to perform, conduct or initiate the operations or methods described herein.

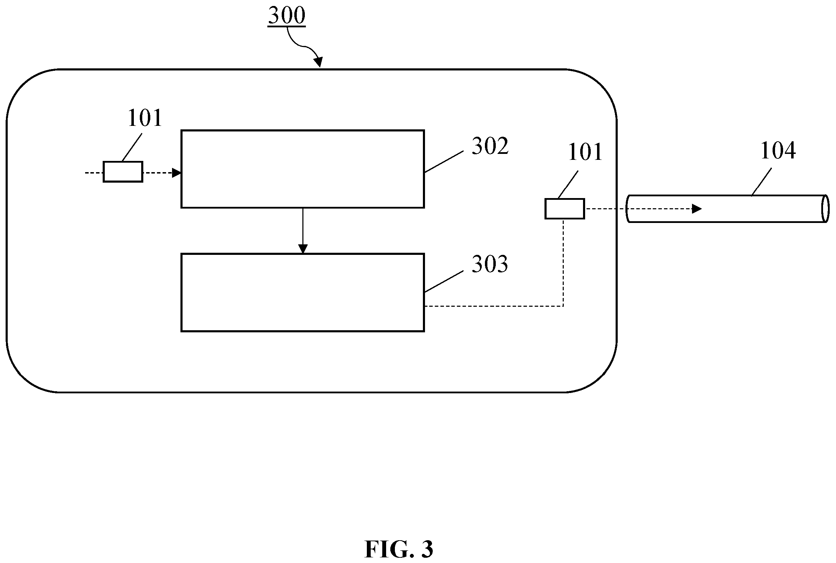

FIG. 3 shows an optical transmitter 300 for transmitting a data signal 101, according to an embodiment of the disclosure.

The optical transmitter 300 comprises an encoder 302 configured to encode the data signal 101 by selecting based on a bit sequence a first symbol and a second symbol from a set of four QPSK symbols 401, 402, 403, 404 (see FIG. 4) for each one of at least two transmission time slots.

The optical transmitter 300 further comprises a modulator 303 configured to use in each transmission time slot the first symbol to modulate a first carrier wave and the second symbol to modulate a second carrier wave, and to transmit the two carrier waves over orthogonal polarizations of an optical carrier 104, wherein the data signal 101 has three information bits b1...b3, and the encoder 302 is configured to generate the bit sequence having eight bits b1...b3, b1'... b5', wherein five overhead bits b1'... b5' are generated according to:

$$b_1' = b_1$$

$$b_2' = b_2$$

$$b_3' = b_1 \oplus b_2 \oplus b_3$$

$$b_4' = \overline{b_3}$$

$$b_5' = \overline{b_1 \oplus b_2 \oplus b_3}$$

The optical transmitter 300 may comprise a processing circuitry (not shown in FIG. 3) configured to perform, conduct or initiate the various operations of the device 100 described herein. The processing circuitry may comprise hardware and software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multi-purpose processors. In one embodiment, the processing circuitry comprises one or more processors and a non-transitory memory connected to the one or more processors. The non-transitory memory may carry executable program code which, when executed by the one or more processors, causes the device 100 to perform, conduct or initiate the operations or methods described herein.

FIG. 4 shows an exemplary set of four symbols, in particular a QPSK constellation and labelling.

In particular, symbols 401, 402, 403, and 404 in consecutive transmission time slots have non-identical polarization states, i.e. they follow the above-described 'polarization alternating' concept. The modulation symbols 401-404 for a given polarization and time slot may be taken from the QPSK constellation shown in FIG. 4 providing the set 400 of four symbols 401-404. The set 400 shown in FIG. 4 may include specifically the four QPSK symbols denoted as -1-1i (symbol 401), -1+1i (symbol 403), 1-1i (symbol 402) and 1+1i (symbols 404).

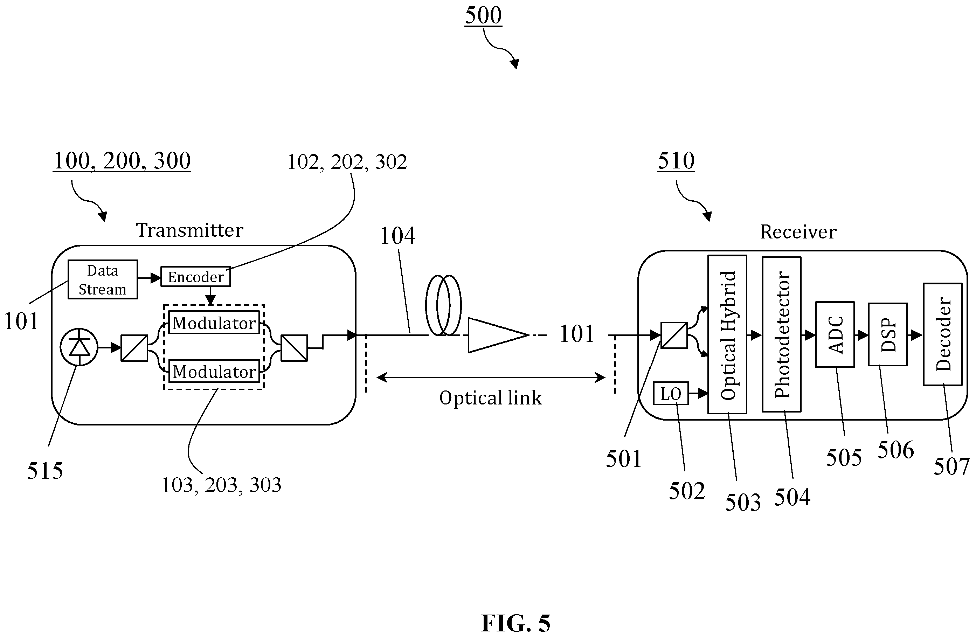

FIG. 5 shows an optical communication or transmission system 500 according to an embodiment of the disclosure, in which the modulation formats may be implemented. The transmission system comprises an optical transmitter (optical transmitter 100 of FIG. 1 or optical transmitter 200 of FIG. 2 or optical transmitter 300 of FIG. 3) according to an embodiment of the present disclosure, an optical (coherent) receiver 510 for receiving the data signal 101, and an optical link (i.e. the optical carrier 104) between the transmitter 100, 200, 300 and receiver 510. The optical receiver 510 is particularly configured to receive and decode the modulated carrier waves of the optical carrier 104, in order to obtain the data signal 101.

In the optical transmitter 100, 200, 300, the encoder 102, 202, 302 encodes the data signal 101 and may generally generate a sequence of M drive signals from an M=4N-dimensional constellation, where N is the number of time slots. The drive signals from the encoder 102, 202, 302 in turn are used to drive the modulator 103, 203, 303 which modulates the respective dimensions onto the (X and Y) polarizations of the optical carrier 104. The modulator 103, 203, 303 and a laser 515 of the optical transmitter 100, 200, 300 may be implemented using devices known in the art.

The optical receiver 510 may be a coherent receiver, which includes an optical beam splitter 501 to separate the received carrier waves into X and Y polarizations. The two obtained signals may be mixed separately with a local oscillator 502 and a set of photodetectors 504 detects the optical power of each of the mixed signals for each polarization generated by an optical hybrid 502. An analog to digital converter 505 (ADC) may sample each current of the photodetectors 504. The sample streams, which each represent one of the modulated dimensions of the optical carrier 504, may then be processed in a digital signal processing 506 (DSP), which may include dispersion compensation and possibly other equalization techniques and down-sampling. The processed sample stream may be further processed in a decoder 507, such that samples corresponding to the same multi-dimensional constellation symbol 401-404 are processed jointly to recover the transmitted data signal 101. Specifically, the decoder 507 in the receiver 510 performs the inverse operation of the encoder 102, 202, 302 in the transmitter 100, 200, 300.

The modulation formats detailed in the embodiments of the present invention may be implemented in the encoder 102, 202, 302 or the transmitter 100, 200, 300. In the encoder 102, 202, 302, a number of input bits, namely information bits of the data signal 101 to be transmitter, may be mapped to a number of output bits of a bit sequence. This bit sequence includes a number of overhead bits generated through arithmetic operations from the input bits. The output bits may then be mapped to multi-dimensional output symbols 401-404 according to the labeling of the constellation points.

In the following, three refined embodiments are specifically described as examples. These embodiments define the encoder 103, 203, 303 and decoder 507 and correspond to three different modulation formats in 8D with spectral efficiencies of 0.5, 1 and 1.5 bit/interval, respectively.

The two orthogonal polarizations are referred to as X and Y. Two consecutive time slots are referred to as T1 and T2. For a given polarization and time slot, the symbols are chosen from the four points in the I-Q-plane shown in FIG. 4.

In the first exemplary embodiment, the modulation format is defined in 8 dimensions: I, Q, polarization and two consecutive time-slots. The encoder maps 1 information bit, referred to as $b_1$ to eight output bits. Further, seven parity bits, referred to as $[b_1', b_2', b_3', b_4', b_5', b_6', b_7']$, are defined using the following equations:

$$\begin{cases} b_1' = \overline{b_1} \\ b_2' = b_1 \\ b_3' = \overline{b_1} \\ b_4' = \overline{b_1} \\ b_5' = b_1 \\ b_6' = b_1 \\ b_7' = \overline{b_1} \end{cases}$$

The set of $[b_1\, b_1'\, b_2'\, b_3'\, b_4'\, b_5'\, b_6'\, b_7']$ is finally obtained. The first two bits $[b_1\, b_1']$ are used to choose a symbol from the QPSK constellation (see FIG. 5). This symbols represents the 2 dimensions I and Q of the X polarization on the time-slot $T_1$. Then, $[b_2'\, b_3']$ are used to choose a symbol from the QPSK constellation, which represents the 2 dimensions I and Q of the Y polarization on the time-slot $T_1$. The same approach is used for $[b_4'\, b_5']$ and $[b_6'\, b_7']$, selecting symbols that represent the 2 dimensions I and Q on the time-slot $T_2$ of both X and Y polarizations, respectively. At the end, a spectral efficiency of 0.5 bits/interval (1 bit in 8 dimensions) is reached, and all obtained symbols are listed in table 1. The labelling of the constellation points (the mapping from information bits to complex symbols) determines the linear channel performance.

Table 1. PB-1B8D modulation format symbols.

| Symbol index | Labelling (1bit in 8 dimensions) | Time slot $T_1$ | | Time slot $T_2$ | |
|---|---|---|---|---|---|
| | | X polarization | Y polarization | X polarization | Y polarization |
| 1 | 0 | -1+1i | -1+1i | +1-1i | -1+1i |
| 2 | 1 | +1-1i | +1-1i | -1+1i | +1-1i |

Furthermore, these symbols have an overall of 4 possible states of polarization with the condition that the state of polarization in $T_2$ is opposite to the one of $T_1$. The Euclidean distance between both modulation format 8D symbols is the higher one offered by the QPSK constellation in 8D.

Table 2. PB-1B8D modulation format. Euclidean distance and number of neighbors for each symbol.

| Euclidean Distance | Number of neighboring symbols |
|---|---|
| 5.65 | 1 |

This table shows that every symbol of the constellation has one neighboring symbol at an Euclidean distances of 5.65.

In the second exemplary embodiment, the modulation format is defined in 8 dimensions: I, Q, polarization and two consecutive time-slots. To map bits into symbols, the following approach is used: From 2 information bits, referred to as [$b_1$,

$b_2$,], six overhead bits ($b_1'$, $b_2'$, $b_3'$, $b_4'$, $b_5'$, $b_6'$) are obtained using the following equations:

$$\begin{cases} b_1' = b_1 \\ b_2' = b_2 \\ b_3' = b_2 \\ b_4' = b_1 \\ b_5' = \overline{b_2} \\ b_6' = \overline{b_1} \end{cases}$$

The set of [$b_1$, $b_2$, $b_1'$, $b_2'$, $b_3'$, $b_4'$, $b_5'$, $b_6'$] is obtained. The mapping is then done as follows. [$b_1$ $b_2$] are used to select a symbol from the QPSK constellation (figure 1). This symbol represents the 2 dimensions I and Q of the X polarization on the time slot $T_1$. Using the same approach, I and Q symbols of Y polarization on $T_1$, X polarization on $T_2$ and finally Y polarization on $T_2$ are obtained using [$b_1'$ $b_2'$], [$b_3'$ $b_4'$] and finally [$b_5'$ $b_6'$], respectively. At the end, a spectral efficiency of 1bits/interval (2 bits in 8 dimensions) is reached and all obtained symbols are given in the following table. The labelling (mapping from bits to symbols) of each symbol is given in the table as well, because as mentioned before, different labelling may result on different linear channel performance.

Table 3. PB-2B8D modulation format symbols.

| Symbol index | Labelling (7bits in 8 dimensions) | Time slot $T_1$ | | Time slot $T_2$ | |
|---|---|---|---|---|---|
| | | X polarization | Y polarization | X polarization | Y polarization |
| 1 | 0 0 | -1-1i | -1-1i | -1-1i | +1+1i |
| 2 | 0 1 | -1+1i | -1+1i | +1-1i | -1+1i |
| 3 | 1 0 | +1-1i | +1-1i | -1+1i | +1-1i |
| 4 | 1 1 | +1+1i | +1+1i | +1+1i | -1-1i |

These symbols have 4 possible states of polarization with the condition that the state of polarization on $T_2$ is opposite to the state of polarization on $T_1$. The constellation has a high symmetry. The structure is such that each symbol has the same number of neighbors. The neighbors are located at 2 different Euclidean distances, as shown on the following table.

Table 4. PB-2B8D modulation format. Euclidean distance and number of neighbors for each symbol.

| Euclidean Distance | Number of neighboring symbols |
|---|---|
| 4 | 2 |
| 5.65 | 1 |

Basically, every symbol of the constellation has 2 neighboring symbols at an Euclidean distance of 4, and one neighboring symbol at an Euclidean distance of 5.65. This structure is highly symmetrical which yield good linear channel performance.

In the third exemplary embodiment, the modulation format is defined in 8 dimensions: I, Q, polarization and two consecutive time-slots. To map bits into symbols, the following approach is used: From 3 information bits, referred to as [$b_1$, $b_2$, $b_3$], five overhead bits ($b_1'$, $b_2'$, $b_3'$, $b_4'$, $b_5'$) are obtained using the following equations:

$$\begin{cases} b_1' = b_1 \\ b_2' = b_2 \\ b_3' = b_1 \oplus b_2 \oplus b_3 \\ b_4' = \overline{b_3} \\ b_5' = \overline{b_1 \oplus b_2 \oplus b_3} \end{cases}$$

The set of [$b_1$, $b_2$, $b_1'$, $b_2'$, $b_3$, $b_3'$, $b_4'$, $b_5'$] is obtained. The mapping is then done as follows. [$b_1$ $b_2$] are used to

select a symbol from the QPSK constellation (figure 1). This symbol represents the 2 dimensions I and Q of the X polarization on the time slot $T_1$. Using the same approach, I and Q symbols of Y polarization on $T_1$, X polarization on $T_2$ and finally Y polarization on $T_2$ are obtained using [$b_1$' $b_2$'], [$b_3$ $b_3$'] and finally [$b_4$' $b_5$'], respectively. At the end, a spectral efficiency of 1.5bits/interval (3 bits in 8 dimensions) is reached and all obtained symbols are given in the following table. The labelling (mapping from bits to symbols) of each symbol is given in the table as well, because as mentioned before, different labelling may result on different linear channel performance.

Table 5. PB-3B8D modulation format symbols.

| Symbol index | Labelling (7bits in 8 dimensions) | Time slot $T_1$ | | Time slot $T_2$ | |
|---|---|---|---|---|---|
| | | X polarization | Y polarization | X polarization | Y polarization |
| 1 | 0 0 0 | -1-1i | -1-1i | -1-1i | +1+1i |
| 2 | 0 0 1 | -1-1i | -1-1i | +1+1i | -1-1i |
| 3 | 0 1 0 | -1+1i | -1+1i | -1+1i | +1-1i |
| 4 | 0 1 1 | -1+1i | -1+1i | +1-1i | -1+1i |
| 5 | 1 0 0 | +1-1i | +1-1i | -1+1i | +1-1i |
| 6 | 1 0 1 | +1-1i | +1-1i | +1-1i | -1+1i |
| 7 | 1 1 0 | +1+1i | +1+1i | -1-1i | +1+1i |
| 8 | 1 1 1 | +1+1i | +1+1i | +1+1i | -1-1i |

These symbols have 4 possible states of polarization with the condition that the state of polarization on $T_2$ is either opposite to the state of polarization on $T_1$. The constellation has a high symmetry. The structure is such that each symbol has the same number of neighbors. The neighbors are located at 2 different Euclidean distances, as shown on the following table.

Table 6. PB-2B8D modulation format. Euclidean distance and number of neighbors for each symbol.

| Euclidean Distance | Number of neighboring symbols |
|---|---|
| 4 | 6 |
| 5.65 | 1 |

Basically, every symbol of the constellation has 6 neighboring symbols at an Euclidean distance of 4, and one neighboring symbol at an Euclidean distance of 5.65. This structure is highly symmetrical which yield good linear channel performance.

The optical system 500 may comprise a processing circuitry (not shown in FIG. 5) configured to perform, conduct or initiate the various operations of the device 100 described herein. The processing circuitry may comprise hardware and software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multi-purpose processors. In one embodiment, the processing circuitry comprises one or more processors and a non-transitory memory connected to the one or more processors. The non-transitory memory may carry executable program code which, when executed by the one or more processors, causes the device 100 to perform, conduct or initiate the operations or methods described herein.

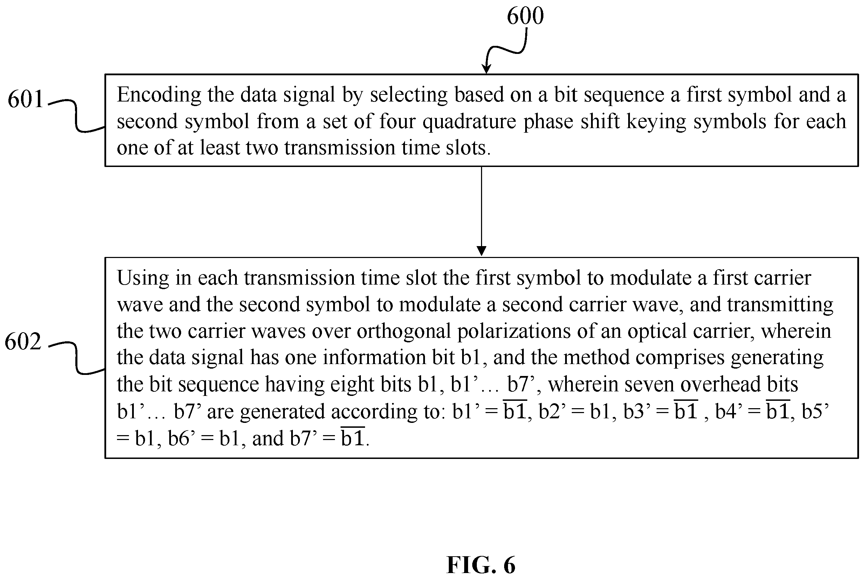

FIG. 6 shows a method 600 according to an embodiment of the invention for optically transmitting a data signal 101. The method 600 may be carried out by the optical transmitter 100, as it described above.

The method 600 comprises a step 601 of encoding 601 the data signal 101 by selecting based on a bit sequence a first symbol and a second symbol from a set of four quadrature phase shift keying, QPSK, symbols 401, 402, 403, 404 for each one of at least two transmission time slots.

The method 600 further comprises a step 602 of using 602 in each transmission time slot the first symbol to modulate a first carrier wave and the second symbol to modulate a second carrier wave, and transmitting the two carrier waves over orthogonal polarizations of an optical carrier 104, wherein the data signal 101 has one information bit b1, and the method 600 comprises generating the bit sequence having eight bits b1, b1'... b7', wherein seven overhead bits b1'... b7' are generated according to:

$$b1' = \overline{b1}$$

$$b2' = b1$$

$$b3' = \overline{b1}$$

$$b4' = \overline{b1}$$

$$b5' = b1$$

$$b6' = b1$$

$$b7' = \overline{b1}$$

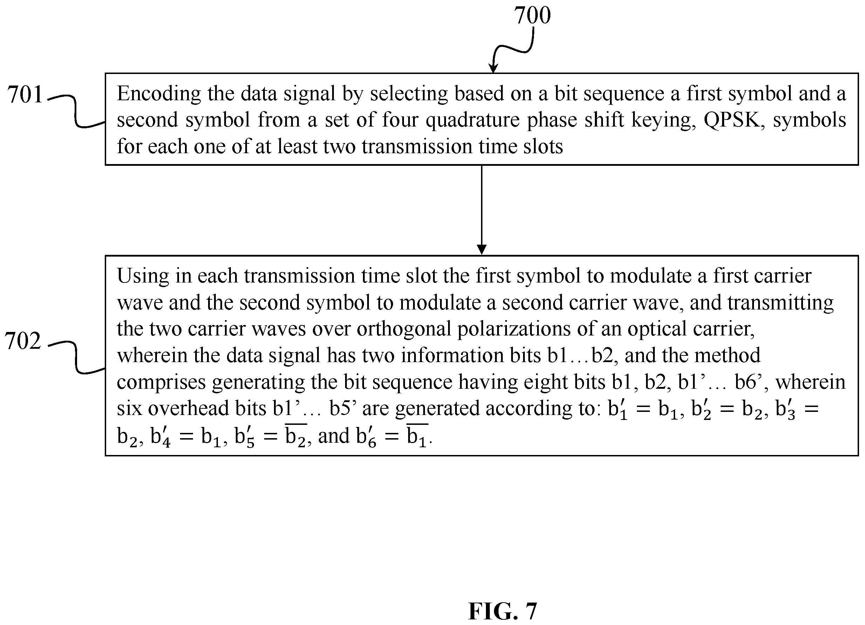

FIG. 7 shows a method 700 according to an embodiment of the invention for optically transmitting a data signal 101. The method 700 may be carried out by the optical transmitter 200, as it described above.

The method 700 comprises a step 701 of encoding 701 the data signal 101 by selecting based on a bit sequence a first symbol and a second symbol from a set of four quadrature phase shift keying, QPSK, symbols 401, 402, 403, 404 for each one of at least two transmission time slots.

The method 700 further comprises a step 702 of using in each transmission time slot the first symbol to modulate a first carrier wave and the second symbol to modulate a second carrier wave, and transmitting the two carrier waves over orthogonal polarizations of an optical carrier 104, wherein the data signal 101 has two information bits b1...b2, and the method 700 comprises generating the bit sequence having eight bits b1, b2, b1'... b6', wherein six overhead bits b1'... b5' are generated according to:

$$b_1' = b_1$$

$$b_2' = b_2$$

$$b_3' = b_2$$

$$b_4' = b_1$$

$$b_5' = \overline{b_2}$$

$$b_6' = \overline{b_1}$$

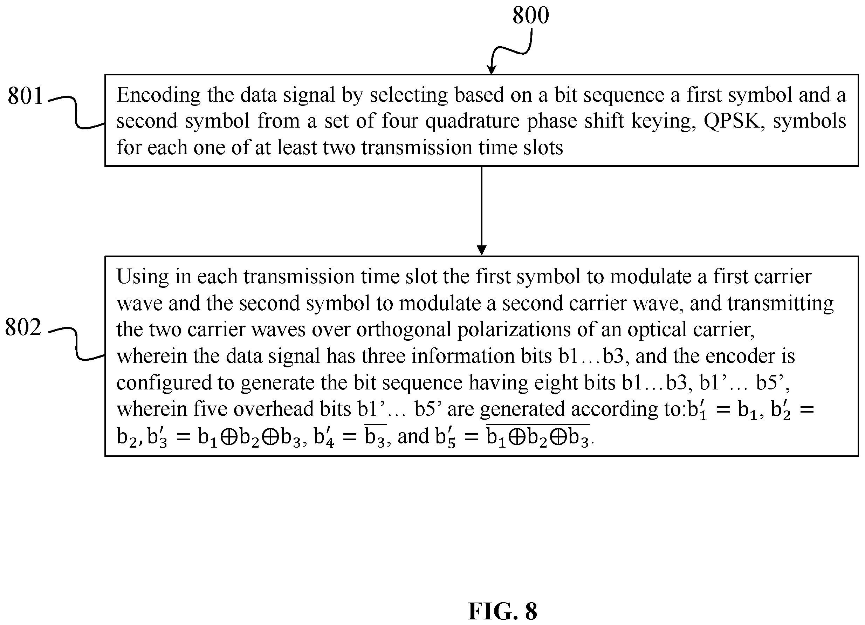

FIG. 8 shows a method 800 according to an embodiment of the invention for optically transmitting a data signal 101. The method 800 may be carried out by the optical transmitter 300, as it described above.

The method 800 comprises a step 801 of encoding 801 the data signal 101 by selecting based on a bit sequence a first symbol and a second symbol from a set of four quadrature phase shift keying, QPSK, symbols 401, 402, 403, 404 for each one of at least two transmission time slots.

The method 800 further comprises a step 802 of using in each transmission time slot the first symbol to modulate a first carrier wave and the second symbol to modulate a second carrier wave, and transmitting the two carrier waves over orthogonal polarizations of an optical carrier 104, wherein the data signal 101 has three information bits b1...b3, and the method 800 comprises generating the bit sequence having eight bits b1...b3, b1'... b5', wherein five overhead bits b1'... b5' are generated according to:

$$b_1' = b_1$$

$$b'_2 = b_2$$

$$b'_3 = b_1 \oplus b_2 \oplus b_3$$

$$b'_4 = \overline{b_3}$$

$$b'_5 = \overline{b_1 \oplus b_2 \oplus b_3}$$

The present disclosure has been described in conjunction with various embodiments as examples as well as implementations. However, other variations can be understood and effected by those persons skilled in the art and practicing the claimed disclosure, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation. The invention is set out in the appended set of claims.

## Claims

1. An optical transmitter (100) for transmitting a data signal (101), comprising

   an encoder (102) configured to encode the data signal (101) by selecting based on a bit sequence a first symbol and a second symbol from a set of four quadrature phase shift keying, QPSK, symbols (401, 402, 403, 404) for each one of at least two transmission time slots, and
   a modulator (103) configured to use in each transmission time slot the first symbol to modulate a first carrier wave and the second symbol to modulate a second carrier wave, and to transmit the two carrier waves over orthogonal polarizations of an optical carrier (104),
   wherein the data signal (101) has one information bit b1, and the encoder (102) is configured to generate the bit sequence having eight bits b1, b1'... b7', wherein seven overhead bits b1'... b7' are generated according to:

   $$b1' = \overline{b1}$$

   $$b2' = b1$$

   $$b3' = \overline{b1}$$

   $$b4' = \overline{b1}$$

   $$b5' = b1$$

   $$b6' = b1$$

   $$b7' = \overline{b1}$$

2. Optical transmitter (100) according to claim 1, wherein
   for two consecutive transmission time slots T1 and T2, for two orthogonal polarizations X and Y of the optical carrier (104), and for a set of four QPSK symbols (401, 402, 403, 404) denoted -1-1i, -1+1i, 1-1i and 1+1i, the encoder (102) is configured to select:

| Labelling bit b1 | Time slot $T_1$ | | Time slot $T_2$ | |
|---|---|---|---|---|
| | X polarization | Y polarization | X polarization | Y polarization |
| 0 | -1+1i | -1+1i | +1-1i | -1+1i |
| 1 | +1-1i | +1-1i | -1+1i | +1-1i |

3. Optical transmitter (100) according to claim 1 or 2, wherein
the optical transmitter (100) is configured to transmit the data signal (101) with a spectral efficiency of 0.5 bits per transmission time slot.

4. An optical transmitter (200) for transmitting a data signal (101), comprising

an encoder (202) configured to encode the data signal (101) by selecting based on a bit sequence a first symbol and a second symbol from a set of four quadrature phase shift keying, QPSK, symbols (401, 402, 403, 404) for each one of at least two transmission time slots, and
a modulator (203) configured to use in each transmission time slot the first symbol to modulate a first carrier wave and the second symbol to modulate a second carrier wave, and to transmit the two carrier waves over orthogonal polarizations of an optical carrier (104),
wherein the data signal (101) has two information bits b1 and b2, and the encoder (202) is configured to generate the bit sequence having eight bits b1, b2, b1'... b6', wherein six overhead bits b1'... b6' are generated according to:

$$b_1' = b_1$$

$$b_2' = b_2$$

$$b_3' = b_2$$

$$b_4' = b_1$$

$$b_5' = \overline{b_2}$$

$$b_6' = \overline{b_1}$$

5. Optical transmitter (200) according to claim 4, wherein
for two consecutive transmission time slots T1 and T2, for two orthogonal polarizations X and Y of the optical carrier (104), and for a set of four QPSK symbols (401, 402, 403, 404) denoted -1-1i, -1+1i, 1-1i and 1+1i, the encoder is configured to select:

| Labelling (from left to right) bits b1 b2 | Time slot $T_1$ | | Time slot $T_2$ | |
|---|---|---|---|---|
| | X polarization | Y polarization | X polarization | Y polarization |
| 0 0 | -1-1i | -1-1i | -1-1i | +1+1i |
| 0 1 | -1+1i | -1+1i | +1-1i | -1+1i |
| 1 0 | +1-1i | +1-1i | -1+1i | +1-1i |
| 1 1 | +1+1i | +1+1i | +1+1i | -1-1i |

6. Optical transmitter (200) according to claim 4 or 5, wherein
the optical transmitter (200) is configured to transmit the data signal (101) with a spectral efficiency of 1 bit per transmission time slot.

7. An optical transmitter (300) for transmitting a data signal (101), comprising

17

an encoder (302) configured to encode the data signal (101) by selecting based on a bit sequence a first symbol and a second symbol from a set of four quadrature phase shift keying, QPSK, symbols (401, 402, 403, 404) for each one of at least two transmission time slots, and

a modulator (303) configured to use in each transmission time slot the first symbol to modulate a first carrier wave and the second symbol to modulate a second carrier wave, and to transmit the two carrier waves over orthogonal polarizations of an optical carrier (104),

wherein the data signal (101) has three information bits bl...b3, and the encoder (302) is configured to generate the bit sequence having eight bits bl...b3, b1'... b5', wherein five overhead bits b1'... b5' are generated according to:

$$b_1' = b_1$$

$$b_2' = b_2$$

$$b_3' = b_1 \oplus b_2 \oplus b_3$$

$$b_4' = \overline{b_3}$$

$$b_5' = \overline{b_1 \oplus b_2 \oplus b_3}$$

8. Optical transmitter (300) according to claim 7, wherein

for two consecutive transmission time slots T1 and T2, for two orthogonal polarizations X and Y of the optical carrier (104), and for a set of four QPSK symbols (401, 402, 403, 404) denoted -1-1i, -1+1i, 1-1i and 1+1i, the encoder (302) is configured to select:

| Labelling (from left to right) bits b1 b2 b3 | Time slot $T_1$ | | Time slot $T_2$ | |
|---|---|---|---|---|
| | X polarization | Y polarization | X polarization | Y polarization |
| 0 0 0 | -1-1i | -1-1i | -1-1i | +1+1i |
| 0 0 1 | -1-1i | -1-1i | +1+1i | -1-1i |
| 0 1 0 | -1+1i | -1+1i | -1+1i | +1-1i |
| 0 1 1 | -1+1i | -1+1i | +1-1i | -1+1i |
| 1 0 0 | +1-1i | +1-1i | -1+1i | +1-1i |
| 1 0 1 | +1-1i | +1-1i | +1-1i | -1+1i |
| 1 1 0 | +1+1i | +1+1i | -1-1i | +1+1i |
| 1 1 1 | +1+1i | +1+1i | +1+1i | -1-1i |

9. Optical transmitter (300) according to claim 7 or 8, wherein

the optical transmitter (300) is configured to transmit the data signal (101) with a spectral efficiency of 1.5 bits per transmission time slot.

10. Optical transmitter (100, 200, 300) according to one of the claims 1 to 9, wherein

the modulator (103, 203, 303) is configured to modulate an In-Phase and a Quadrature component of each carrier wave.

11. Optical transmitter (100, 200, 300) according to one of the claims 1 to 10, wherein

symbols in at least a subset of consecutive transmission time slots have anti-parallel polarization states.

12. Optical transmission system (500), comprising

the optical transmitter (100, 200, 300) according to one of the claims 1 to 11, and
an optical receiver (510) for receiving the data signal (101), wherein the optical receiver (510) is configured to receive and decode the modulated carrier waves of the optical carrier (104) to obtain the data signal.

13. Method (600) of optically transmitting a data signal (101), comprising

encoding (601) the data signal (101) by selecting based on a bit sequence a first symbol and a second symbol from a set of four quadrature phase shift keying, QPSK, symbols (401, 402, 403, 404) for each one of at least two transmission time slots, and
using (602) in each transmission time slot the first symbol to modulate a first carrier wave and the second symbol to modulate a second carrier wave, and transmitting the two carrier waves over orthogonal polarizations of an optical carrier (104),
wherein the data signal (101) has one information bit b1, and the method (600) comprises generating the bit sequence having eight bits b1, bl'... b7', wherein seven overhead bits b1'... b7' are generated according to:

$$b1' = \overline{b1}$$

$$b2' = b1$$

$$b3' = \overline{b1}$$

$$b4' = \overline{b1}$$

$$b5' = b1$$

$$b6' = b1$$

$$b7' = \overline{b1}$$

14. Method (700) of optically transmitting a data signal (101), comprising

encoding (701) the data signal (101) by selecting based on a bit sequence a first symbol and a second symbol from a set of four quadrature phase shift keying, QPSK, symbols (401, 402, 403, 404) for each one of at least two transmission time slots, and
using (702) in each transmission time slot the first symbol to modulate a first carrier wave and the second symbol to modulate a second carrier wave, and transmitting the two carrier waves over orthogonal polarizations of an optical carrier (104),
wherein the data signal (101) has two information bits b1... b2, and the method (700) comprises generating the bit sequence having eight bits b1, b2, b1'... b6', wherein six overhead bits b1'... b6' are generated according to:

$$b'_1 = b_1$$

$$b'_2 = b_2$$

$$b'_3 = b_2$$

$$b'_4 = b_1$$

$$b'_5 = \overline{b_2}$$

$$b'_6 = \overline{b_1}$$

15. Method (800) of optically transmitting a data signal (101), comprising

encoding (801) the data signal (101) by selecting based on a bit sequence a first symbol and a second symbol from a set of four quadrature phase shift keying, QPSK, symbols (401, 402, 403, 404) for each one of at least two transmission time slots, and

using (802) in each transmission time slot the first symbol to modulate a first carrier wave and the second symbol to modulate a second carrier wave, and transmitting the two carrier waves over orthogonal polarizations of an optical carrier (104),

wherein the data signal (101) has three information bits b1... b3, and the method (800) comprises generating the bit sequence having eight bits b1... b3, b1'... b5', wherein five overhead bits b1'... b5' are generated according to:

$$b_1' = b_1$$

$$b_2' = b_2$$

$$b_3' = b_1 \oplus b_2 \oplus b_3$$

$$b_4' = \overline{b_3}$$

$$b_5' = \overline{b_1 \oplus b_2 \oplus b_3}$$

**Patentansprüche**

1. Optischer Sender (100) zum Senden eines Datensignals (101), umfassend

   einen Encoder (102), der dazu konfiguriert ist, das Datensignal (101) zu kodieren, indem er basierend auf einer Bitsequenz ein erstes Symbol und ein zweites Symbol aus einem Satz von vier Quadraturphasenumtastungssymbolen, QPSK-Symbolen, (401, 402, 403, 404) für jeden von mindestens zwei Sendezeitschlitzen auswählt, und

   einen Modulator (103), der dazu konfiguriert ist, in jedem Sendezeitschlitz das erste Symbol zu verwenden, um eine erste Trägerwelle zu modulieren, und das zweite Symbol zu verwenden, um eine zweite Trägerwelle zu modulieren, und die zwei Trägerwellen über orthogonale Polarisationen eines optischen Trägers (104) zu senden,

   wobei das Datensignal (101) ein Informationsbit b1 aufweist und der Encoder (102) dazu konfiguriert ist, die Bitsequenz, die acht Bits b1, b1' ... b7' aufweist, zu erzeugen, wobei sieben Overhead-Bits b1' ... b7' erzeugt werden gemäß:

   $$b1' = \overline{b1}$$

   $$b2' = b1$$

   $$b3' = \overline{b1}$$

   $$b4' = \overline{b1}$$

   $$b5' = b1$$

   $$b6' = b1$$

   $$b7' = \overline{b1}$$

2. Optischer Sender (100) nach Anspruch 1, wobei
   für zwei aufeinanderfolgende Sendezeitschlitze T1 und T2, für zwei orthogonale Polarisationen X und Y des optischen Trägers (104) und für einen Satz von vier QPSK-Symbolen (401, 402, 403, 404), die mit -1-1i, -1+1i, 1-1i und 1+1i bezeichnet sind, der Encoder (102) dazu konfiguriert ist, Folgendes auszuwählen:

| Beschriftung Bit b1 | Zeitschlitz $T_1$ | | Zeitschlitz $T_2$ | |
|---|---|---|---|---|
| | Polarisation X | Polarisation Y | Polarisation X | Polarisation Y |
| 0 | -1+1i | -1+1i | +1-1i | -1+1i |
| 1 | +1-1i | +1-1i | -1+1i | +1-1i |

**3.** Optischer Sender (100) nach Anspruch 1 oder 2, wobei der optische Sender (100) dazu konfiguriert ist, das Datensignal (101) mit einer spektralen Effizienz von 0,5 Bit pro Sendezeitschlitz zu senden.

**4.** Optischer Sender (200) zum Senden eines Datensignals (101), umfassend

einen Encoder (202), der dazu konfiguriert ist, das Datensignal (101) zu kodieren, indem er basierend auf einer Bitsequenz ein erstes Symbol und ein zweites Symbol aus einem Satz von vier Quadraturphasenumtastungssymbolen, QPSK-Symbolen, (401, 402, 403, 404) für jeden von mindestens zwei Sendezeitschlitzen auswählt, und

einen Modulator (203), der dazu konfiguriert ist, in jedem Sendezeitschlitz das erste Symbol zu verwenden, um eine erste Trägerwelle zu modulieren, und das zweite Symbol zu verwenden, um eine zweite Trägerwelle zu modulieren, und die zwei Trägerwellen über orthogonale Polarisationen eines optischen Trägers (104) zu senden,

wobei das Datensignal (101) zwei Informationsbits b1 und b2 aufweist und der Encoder (202) dazu konfiguriert ist, die Bitsequenz, die acht Bits b1, b2, b1' ... b6' aufweist, zu erzeugen, wobei sechs Overhead-Bits b1' ... b6' erzeugt werden gemäß:

$$b_1' = b_1$$

$$b_2' = b_2$$

$$b_3' = b_2$$

$$b_4' = b_1$$

$$b_5' = \overline{b_2}$$

$$b_6' = \overline{b_1}$$

**5.** Optischer Sender (200) nach Anspruch 4, wobei für zwei aufeinanderfolgende Sendezeitschlitze T1 und T2, für zwei orthogonale Polarisationen X und Y des optischen Trägers (104) und für einen Satz von vier QPSK-Symbolen (401, 402, 403, 404), die mit -1-1i, -1+1i, 1-1i und 1+1i bezeichnet sind, der Encoder dazu konfiguriert ist, Folgendes auszuwählen:

| Beschriftung (von links nach rechts) Bits b1 b2 | Zeitschlitz $T_1$ | | Zeitschlitz $T_2$ | |
|---|---|---|---|---|
| | Polarisation X | Polarisation Y | Polarisation X | Polarisation Y |
| 0 0 | -1-1i | -1-1i | -1-1i | +1+1i |
| 0 1 | -1+1i | -1+1i | +1-1i | -1+1i |
| 1 0 | +1-1i | +1-1i | -1+1i | +1-1i |
| 1 1 | +1+1i | +1+1i | +1+1i | -1-1i |

**6.** Optischer Sender (200) nach Anspruch 4 oder 5, wobei
der optische Sender (200) dazu konfiguriert ist, das Datensignal (101) mit einer spektralen Effizienz von 1 Bit pro Sendezeitschlitz zu senden.

**7.** Optischer Sender (300) zum Senden eines Datensignals (101), umfassend

einen Encoder (302), der dazu konfiguriert ist, das Datensignal (101) zu kodieren, indem er basierend auf einer Bitsequenz ein erstes Symbol und ein zweites Symbol aus einem Satz von vier Quadraturphasenumtastungssymbolen, QPSK-Symbolen, (401, 402, 403, 404) für jeden von mindestens zwei Sendezeitschlitzen auswählt, und
einen Modulator (303), der dazu konfiguriert ist, in jedem Sendezeitschlitz das erste Symbol zu verwenden, um eine erste Trägerwelle zu modulieren, und das zweite Symbol zu verwenden, um eine zweite Trägerwelle zu modulieren, und die zwei Trägerwellen über orthogonale Polarisationen eines optischen Trägers (104) zu senden,
wobei das Datensignal (101) drei Informationsbits b1...b3 aufweist und der Encoder (302) dazu konfiguriert ist, die Bitsequenz, die acht Bits b1...b3, b1' ... b5' aufweist, zu erzeugen, wobei fünf Overhead-Bits b1' ... b5' erzeugt werden gemäß:

$$b_1' = b_1$$

$$b_2' = b_2$$

$$b_3' = b_1 \oplus b_2 \oplus b_3$$

$$b_4' = \overline{b_3}$$

$$b_5' = \overline{b_1 \oplus b_2 \oplus b_3}$$

**8.** Optischer Sender (300) nach Anspruch 7, wobei
für zwei aufeinanderfolgende Sendezeitschlitze T1 und T2, für zwei orthogonale Polarisationen X und Y des optischen Trägers (104) und für einen Satz von vier QPSK-Symbolen (401, 402, 403, 404), die mit -1-1i, -1+1i, 1-1i und 1+1i bezeichnet sind, der Encoder (302) dazu konfiguriert ist, Folgendes auszuwählen:

| Beschriftung (von links nach rechts) Bits b1 b2 b3 | Zeitschlitz $T_1$ | | Zeitschlitz $T_2$ | |
|---|---|---|---|---|
| | Polarisation X | Polarisation Y | Polarisation X | Polarisation Y |
| 0 0 0 | -1-1i | -1-1i | -1-1i | +1+1i |
| 0 0 1 | -1-1i | -1-1i | +1+1i | -1-1i |
| 0 1 0 | -1+1i | -1+1i | -1+1i | +1-1i |
| 0 1 1 | -1+1i | -1+1i | +1-1i | -1+1i |
| 1 0 0 | +1-1i | +1-1i | -1+1i | +1-1i |
| 1 0 1 | +1-1i | +1-1i | +1-1i | -1+1i |
| 1 1 0 | +1+1i | +1+1i | -1-1i | +1+1i |
| 1 1 1 | +1+1i | +1+1i | +1+1i | -1-1i |

**9.** Optischer Sender (300) nach Anspruch 7 oder 8, wobei
der optische Sender (300) dazu konfiguriert ist, das Datensignal (101) mit einer spektralen Effizienz von 1,5 Bit pro Sendezeitschlitz zu senden.

**10.** Optischer Sender (100, 200, 300) nach einem der Ansprüche 1 bis 9, wobei
der Modulator (103, 203, 303) dazu konfiguriert ist, eine In-Phase- und eine Quadratur-Komponente jeder Trägerwelle zu modulieren.

11. Optischer Sender (100, 200, 300) nach einem der Ansprüche 1 bis 10, wobei
Symbole in mindestens einer Teilmenge aufeinanderfolgender Sendezeitschlitze antiparallele Polarisationszustände aufweisen.

12. Optisches Sendesystem (500), umfassend

den optischen Sender (100, 200, 300) nach einem der Ansprüche 1 bis 11 und
einen optischen Empfänger (510) zum Empfangen des Datensignals (101), wobei der optische Empfänger (510) dazu konfiguriert ist, die modulierten Trägerwellen des optischen Trägers (104) zu empfangen und zu dekodieren, um das Datensignal zu erlangen.

13. Verfahren (600) zum optischen Senden eines Datensignals (101), umfassend

Kodieren (601) des Datensignals (101) durch Auswählen, basierend auf einer Bitsequenz, eines ersten Symbols und eines zweiten Symbols aus einem Satz von vier Quadraturphasenumtastungssymbolen, QPSK-Symbolen, (401, 402, 403, 404) für jeden von mindestens zwei Sendezeitschlitzen und Verwenden (602), in jedem Sendezeitschlitz, des ersten Symbols, um eine erste Trägerwelle zu modulieren, und des zweiten Symbols, um eine zweite Trägerwelle zu modulieren, und Senden der zwei Trägerwellen über orthogonale Polarisationen eines optischen Trägers (104),
wobei das Datensignal (101) ein Informationsbit b1 aufweist und das Verfahren (600) Erzeugen der Bitsequenz, die acht Bits b1, b1' ... b7' aufweist, umfasst, wobei sieben Overhead-Bits b1' ... b7' erzeugt werden gemäß:

$$b1' = \overline{b1}$$

$$b2' = b1$$

$$b3' = \overline{b1}$$

$$b4' = \overline{b1}$$

$$b5' = b1$$

$$b6' = b1$$

$$b7' = \overline{b1}$$

14. Verfahren (700) zum optischen Senden eines Datensignals (101), umfassend

Kodieren (701) des Datensignals (101) durch Auswählen, basierend auf einer Bitsequenz, eines ersten Symbols und eines zweiten Symbols aus einem Satz von vier Quadraturphasenumtastungssymbolen, QPSK-Symbolen, (401, 402, 403, 404) für jeden von mindestens zwei Sendezeitschlitzen und Verwenden (702), in jedem Sendezeitschlitz, des ersten Symbols, um eine erste Trägerwelle zu modulieren, und des zweiten Symbols, um eine zweite Trägerwelle zu modulieren, und Senden der zwei Trägerwellen über orthogonale Polarisationen eines optischen Trägers (104),
wobei das Datensignal (101) zwei Informationsbits b1...b2 aufweist und das Verfahren (700) Erzeugen der Bitsequenz, die acht Bits b1, b2, b1' ... b6' aufweist, umfasst, wobei sechs Overhead-Bits b1' ... b6' erzeugt werden gemäß:

$$b'_1 = b_1$$

$$b'_2 = b_2$$

$$b_3' = b_2$$

$$b_4' = b_1$$

$$b_5' = \overline{b_2}$$

$$b_6' = \overline{b_1}$$

**15.** Verfahren (800) zum optischen Senden eines Datensignals (101), umfassend

Kodieren (801) des Datensignals (101) durch Auswählen, basierend auf einer Bitsequenz, eines ersten Symbols und eines zweiten Symbols aus einem Satz von vier Quadraturphasenumtastungssymbolen, QPSK-Symbolen, (401, 402, 403, 404) für jeden von mindestens zwei Sendezeitschlitzen und Verwenden (802), in jedem Sendezeitschlitz, des ersten Symbols, um eine erste Trägerwelle zu modulieren, und des zweiten Symbols, um eine zweite Trägerwelle zu modulieren, und Senden der zwei Trägerwellen über orthogonale Polarisationen eines optischen Trägers (104),

wobei das Datensignal (101) drei Informationsbits b1...b3 aufweist und das Verfahren (800) Erzeugen der Bitsequenz, die acht Bits b1...b3, b1' ... b5' aufweist, umfasst, wobei fünf Overhead-Bits b1' ... b5' erzeugt werden gemäß:

$$b_1' = b_1$$

$$b_2' = b_2$$

$$b_3' = b_1 \oplus b_2 \oplus b_3$$

$$b_4' = \overline{b_3}$$

$$b_5' = \overline{b_1 \oplus b_2 \oplus b_3}$$

## Revendications

**1.** Émetteur optique (100) pour transmettre un signal de données (101), comprenant

un codeur (102) configuré pour coder le signal de données (101) par sélection sur la base d'une séquence de bits d'un premier symbole et d'un second symbole parmi un ensemble de quatre symboles de modulation par déplacement de phase en quadrature, QPSK (401, 402, 403, 404), pour chacun d'au moins deux intervalles de temps de transmission, et

un modulateur (103) configuré pour utiliser dans chaque intervalle de temps de transmission le premier symbole pour moduler une première onde porteuse et le second symbole pour moduler une seconde onde porteuse, et pour transmettre les deux ondes porteuses sur des polarisations orthogonales d'une porteuse optique (104),

dans lequel le signal de données (101) a un bit d'information b1, et le codeur (102) est configuré pour générer la séquence de bits présentant huit bits b1, b1'...b7', dans lequel sept bits de surdébit b1'...b7' sont générés selon :

$$b1' = \overline{b1}$$

$$b2' = b1$$

$$b3' = \overline{b1}$$

$$b4' = \overline{b1}$$

$$b5' = b1$$

$$b6' = b1$$

$$b7' = \overline{b1}$$

**2.** Émetteur optique (100) selon la revendication 1, dans lequel
pour deux intervalles de temps de transmission consécutifs T1 et T2, pour deux polarisations orthogonales X et Y de la porteuse optique (104), et pour un ensemble de quatre symboles QPSK (401, 402, 403, 404) notés -1-1i, -1+1i, 1-1i et 1+1i, le codeur (102) est configuré pour sélectionner :

| Étiquetage bit b1 | Intervalle de temps $T_1$ | | Intervalle de temps $T_2$ | |
|---|---|---|---|---|
| | Polarisation X | Polarisation Y | Polarisation X | Polarisation Y |
| 0 | -1+1i | -1+1i | +1-1i | -1+1i |
| 1 | +1-1i | +1-1i | -1+1i | +1-1i |

**3.** Émetteur optique (100) selon la revendication 1 ou 2, dans lequel
l'émetteur optique (100) est configuré pour transmettre le signal de données (101) avec une efficacité spectrale de 0,5 bit par intervalle de temps de transmission.

**4.** Émetteur optique (200) pour transmettre un signal de données (101), comprenant

un codeur (202) configuré pour coder le signal de données (101) par sélection sur la base d'une séquence de bits d'un premier symbole et d'un second symbole parmi un ensemble de quatre symboles de modulation par déplacement de phase en quadrature, QPSK (401, 402, 403, 404), pour chacun d'au moins deux intervalles de temps de transmission, et
un modulateur (203) configuré pour utiliser, dans chaque intervalle de temps de transmission, le premier symbole pour moduler une première onde porteuse et le second symbole pour moduler une seconde onde porteuse, et pour transmettre les deux ondes porteuses sur des polarisations orthogonales d'une porteuse optique (104), dans lequel le signal de données (101) a deux bits d'information b1 et b2, et le codeur (202) est configuré pour générer la séquence de bits présentant huit bits b1, b2, b1'...b6', dans lequel six bits de surdébit b1'...b6' sont générés selon :

$$b'_1 = b_1$$

$$b'_2 = b_2$$

$$b'_3 = b_2$$

$$b'_4 = b_1$$

$$b'_5 = \overline{b_2}$$

$$b'_6 = \overline{b_1}$$

**5.** Émetteur optique (200) selon la revendication 4, dans lequel
pour deux intervalles de temps de transmission consécutifs T1 et T2, pour deux polarisations orthogonales X et Y de la porteuse optique (104), et pour un ensemble de quatre symboles QPSK (401, 402, 403, 404) notés -1-1i, -1+1i, 1-1i et 1+1i, le codeur est configuré pour sélectionner :

| Étiquetage (de gauche à droite) bits b1 b2 | Intervalle de temps $T_1$ | | Intervalle de temps $T_2$ | |
|---|---|---|---|---|
| | Polarisation X | Polarisation Y | Polarisation X | Polarisation Y |
| 0 0 | -1-1i | -1-1i | -1-1i | +1+1i |
| 0 1 | -1+1i | -1+1i | +1-1i | -1+1i |
| 1 0 | +1-1i | +1-1i | -1+1i | +1-1i |
| 1 1 | +1+1i | +1+1i | +1+1i | -1-1i |

**6.** Émetteur optique (200) selon la revendication 4 ou 5, dans lequel
l'émetteur optique (200) est configuré pour transmettre le signal de données (101) avec une efficacité spectrale de 1 bit par intervalle de temps de transmission.

**7.** Émetteur optique (300) pour transmettre un signal de données (101), comprenant

un codeur (302) configuré pour coder le signal de données (101) par sélection sur la base d'une séquence de bits d'un premier symbole et d'un second symbole parmi un ensemble de quatre symboles de modulation par déplacement de phase en quadrature, QPSK (401, 402, 403, 404), pour chacun d'au moins deux intervalles de temps de transmission, et
un modulateur (303) configuré pour utiliser dans chaque intervalle de temps de transmission le premier symbole pour moduler une première onde porteuse et le second symbole pour moduler une seconde onde porteuse, et pour transmettre les deux ondes porteuses sur des polarisations orthogonales d'une porteuse optique (104), dans lequel le signal de données (101) a trois bits d'information b1...b3, et le codeur (302) est configuré pour générer la séquence de bits présentant huit bits b1...b3, b1'...b5', dans lequel cinq bits de surdébit b1'...b5' sont générés selon :

$$b_1' = b_1$$

$$b_2' = b_2$$

$$b_3' = b_1 \oplus b_2 \oplus b_3$$

$$b_4' = \overline{b_3}$$

$$b_5' = \overline{b_1 \oplus b_2 \oplus b_3}$$

**8.** Émetteur optique (300) selon la revendication 7, dans lequel
pour deux intervalles de temps de transmission consécutifs T1 et T2, pour deux polarisations orthogonales X et Y de la porteuse optique (104), et pour un ensemble de quatre symboles QPSK (401, 402, 403, 404) notés -1-1i, -1+1i, 1-1i et 1+1i, le codeur (302) est configuré pour sélectionner :

| Étiquetage (de gauche à droite) bits b1 b2 b3 | Intervalle de temps $T_1$ | | Intervalle de temps $T_2$ | |
|---|---|---|---|---|
| | Polarisation X | Polarisation Y | Polarisation X | Polarisation Y |
| 0 0 0 | -1-1i | -1-1i | -1-1i | +1+1i |
| 0 0 1 | -1-1i | -1-1i | +1+1i | -1-1i |
| 0 1 0 | -1+1i | -1+1i | -1+1i | +1-1i |
| 0 1 1 | -1+1i | -1+1i | +1-1i | -1+1i |
| 1 0 0 | +1-1i | +1-1i | -1+1i | +1-1i |
| 1 0 1 | +1-1i | +1-1i | +1-1i | -1+1i |
| 1 1 0 | +1+1i | +1+1i | -1-1i | +1+1i |

(continued)

| Étiquetage (de gauche à droite) bits b1 b2 b3 | Intervalle de temps $T_1$ | | Intervalle de temps $T_2$ | |
|---|---|---|---|---|
| | Polarisation X | Polarisation Y | Polarisation X | Polarisation Y |
| 1 1 1 | +1+1i | +1+1i | +1+1i | -1-1i |

9. Émetteur optique (300) selon la revendication 7 ou 8, dans lequel
   l'émetteur optique (300) est configuré pour transmettre le signal de données (101) avec une efficacité spectrale de 1,5 bit par intervalle de temps de transmission.

10. Émetteur optique (100, 200, 300) selon l'une des revendications 1 à 9, dans lequel
    le modulateur (103, 203, 303) est configuré pour moduler une composante en phase et une composante en quadrature de chaque onde porteuse.

11. Émetteur optique (100, 200, 300) selon l'une des revendications 1 à 10, dans lequel
    des symboles dans au moins un sous-ensemble d'intervalles de temps de transmission consécutifs ont des états de polarisation antiparallèles.

12. Système de transmission optique (500), comprenant

    un émetteur optique (100, 200, 300) selon l'une des revendications 1 à 11, et
    un récepteur optique (510) pour recevoir le signal de données (101), dans lequel le récepteur optique (510) est configuré pour recevoir et décoder les ondes porteuses modulées de la porteuse optique (104) pour obtenir le signal de données.

13. Procédé (600) de transmission optique d'un signal de données (101), comprenant

    le codage (601) du signal de données (101) par sélection sur la base d'une séquence de bits d'un premier symbole et d'un second symbole parmi un ensemble de quatre symboles de modulation par déplacement de phase en quadrature, QPSK (401, 402, 403, 404), pour chacun d'au moins deux intervalles de temps de transmission, et
    l'utilisation (602) dans chaque intervalle de temps de transmission du premier symbole pour moduler une première onde porteuse et du second symbole pour moduler une seconde onde porteuse, et la transmission des deux ondes porteuses sur des polarisations orthogonales d'une porteuse optique (104),
    dans lequel le signal de données (101) a un bit d'information b1, et le procédé (600) comprend la génération de la séquence de bits présentant huit bits b1, b1'...b7', dans lequel sept bits de surdébit b1'...b7' sont générés selon :

$$b1' = \overline{b1}$$

$$b2' = b1$$

$$b3' = \overline{b1}$$

$$b4' = \overline{b1}$$

$$b5' = b1$$

$$b6' = b1$$

$$b7' = \overline{b1}$$

14. Procédé (700) de transmission optique d'un signal de données (101), comprenant

    le codage (701) du signal de données (101) par sélection sur la base d'une séquence de bits d'un premier symbole et d'un second symbole parmi un ensemble de quatre symboles de modulation par déplacement de phase en quadrature, QPSK (401, 402, 403, 404), pour chacun d'au moins deux intervalles de temps de transmission, et

l'utilisation (702) dans chaque intervalle de temps de transmission, du premier symbole pour moduler une première onde porteuse et du second symbole pour moduler une seconde onde porteuse, et la transmission des deux ondes porteuses sur des polarisations orthogonales d'une porteuse optique (104),

dans lequel le signal de données (101) a deux bits d'information b1...b2, et le procédé (700) comprend la génération de la séquence de bits comportant huit bits b1, b2, b1'...b6', dans lequel six bits de surdébit b1'...b6' sont générés selon :

$$b_1' = b_1$$

$$b_2' = b_2$$

$$b_3' = b_2$$

$$b_4' = b_1$$

$$b_5' = \overline{b_2}$$

$$b_6' = \overline{b_1}$$

**15.** Procédé (800) de transmission optique d'un signal de données (101), comprenant

le codage (801) du signal de données (101) par sélection sur la base d'une séquence de bits d'un premier symbole et d'un second symbole parmi un ensemble de quatre symboles de modulation par déplacement de phase en quadrature, QPSK (401, 402, 403, 404), pour chacun d'au moins deux intervalles de temps de transmission, et

l'utilisation (802) dans chaque intervalle de temps de transmission du premier symbole pour moduler une première onde porteuse et du second symbole pour moduler une seconde onde porteuse, et la transmission des deux ondes porteuses sur des polarisations orthogonales d'une porteuse optique (104),

dans lequel le signal de données (101) a trois bits d'information b1...b3, et le procédé (800) comprend la génération de la séquence de bits présentant huit bits b1...b3, b1'...b5', dans lequel cinq bits de surdébit b1'...b5' sont générés selon :

$$b_1' = b_1$$

$$b_2' = b_2$$

$$b_3' = b_1 \oplus b_2 \oplus b_3$$

$$b_4' = \overline{b_3}$$

$$b_5' = \overline{b_1 \oplus b_2 \oplus b_3}$$

FIG. 1

**FIG. 2**

**FIG. 3**

**FIG. 4**

**FIG. 5**

$600$

601 — Encoding the data signal by selecting based on a bit sequence a first symbol and a second symbol from a set of four quadrature phase shift keying symbols for each one of at least two transmission time slots.

602 — Using in each transmission time slot the first symbol to modulate a first carrier wave and the second symbol to modulate a second carrier wave, and transmitting the two carrier waves over orthogonal polarizations of an optical carrier, wherein the data signal has one information bit b1, and the method comprises generating the bit sequence having eight bits b1, b1'... b7', wherein seven overhead bits b1'... b7' are generated according to: b1' = $\overline{b1}$, b2' = b1, b3' = $\overline{b1}$, b4' = $\overline{b1}$, b5' = b1, b6' = b1, and b7' = $\overline{b1}$.

**FIG. 6**

700

701 — Encoding the data signal by selecting based on a bit sequence a first symbol and a second symbol from a set of four quadrature phase shift keying, QPSK, symbols for each one of at least two transmission time slots

702 — Using in each transmission time slot the first symbol to modulate a first carrier wave and the second symbol to modulate a second carrier wave, and transmitting the two carrier waves over orthogonal polarizations of an optical carrier, wherein the data signal has two information bits b1...b2, and the method comprises generating the bit sequence having eight bits b1, b2, b1'... b6', wherein six overhead bits b1'... b5' are generated according to: $b_1' = b_1$, $b_2' = b_2$, $b_3' = b_2$, $b_4' = b_1$, $b_5' = \overline{b_2}$, and $b_6' = \overline{b_1}$.

**FIG. 7**

801 — Encoding the data signal by selecting based on a bit sequence a first symbol and a second symbol from a set of four quadrature phase shift keying, QPSK, symbols for each one of at least two transmission time slots

802 — Using in each transmission time slot the first symbol to modulate a first carrier wave and the second symbol to modulate a second carrier wave, and transmitting the two carrier waves over orthogonal polarizations of an optical carrier, wherein the data signal has three information bits b1...b3, and the encoder is configured to generate the bit sequence having eight bits b1...b3, b1'... b5', wherein five overhead bits b1'... b5' are generated according to: $b_1' = b_1$, $b_2' = b_2$, $b_3' = b_1 \oplus b_2 \oplus b_3$, $b_4' = \overline{b_3}$, and $b_5' = \overline{b_1 \oplus b_2 \oplus b_3}$.

**FIG. 8**

EP 4 042 600 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

*   WO 2019048028 A1

**Non-patent literature cited in the description**

*   **BENDIMERAD D. F. et al.** *Nonlinearity-tolerant 8D modulation formats by set-partitioning PDM-QPSK*